# EUROPEAN PATENT APPLICATION

(11) **EP 4 765 262 A1**
(43) Date of publication of application: **24.06.2026**
(21) Application number: 24872819.8
(22) Date of filing: 20.09.2024
(51) Int. Cl.: H01M 10/04, H01M 50/105, H01M 10/058, H01M 50/502, H01M 50/543, H01M 50/126

(54) **SECONDARY BATTERY MANUFACTURING METHOD**

(30) Priority: 25.09.2023 KR 20230127695
(71) Applicant: LG Energy Solution, Ltd., Seoul 07335 (KR)
(72) Inventor: YOON, Doo Han, Daejeon 34122 (KR); LEE, Jin Kyu, Daejeon 34122 (KR)
(74) Representative: Plasseraud IP
(86) International application number: PCT/KR2024/014136
(87) International publication number: WO 2025/071111

(57) **Abstract**

Disclosed herein relates to a method of manufacturing a secondary battery including: stacking a plurality of unit cells in a first direction to form a stack-type electrode assembly; coupling a multifunctional terminal block (MTB) to both ends of the stack-type electrode assembly extending in a second direction perpendicular to the first direction; attaching a laminate sheet to the MTB to enclose the stack-type electrode assembly; injecting an electrolyte into the stack-type electrode assembly enclosed by the laminate sheet; and sealing the laminate sheet to form a cell case, wherein the MTB includes: a MTB housing; a busbar provided within the MTB housing and electrically connected to the stack-type electrode assembly; and an electrode terminal part exposed to an outside of the MTB housing and electrically connected to the busbar.

## Description

### [Technical Field]

The present disclosure relates to a secondary battery manufacturing method, and more specifically, to a secondary battery manufacturing method capable of producing a high capacity secondary battery without fear of damage or defect of the pouch.

This application claims the benefit of priority from Korean Patent Application No. 10-2023-0127695, filed on Sep. 25, 2023, the disclosures of which are incorporated herein by reference.

### [Background]

Unlike primary batteries, secondary batteries can be charged and discharged a plurality of times. Secondary batteries are widely used as an energy source for a variety of wireless devices, including handsets, laptops, cordless vacuum cleaners, and the like. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

Meanwhile, the demand for large-capacity battery packs applied to electric vehicles is increasing. Large-capacity battery packs in automobiles are required to increase safety while increasing capacity.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

The technical problem of the present disclosure is to provide a secondary battery manufacturing method that can produce high capacity secondary batteries without fear of damage or defect of the pouch.

### [Technical Solution]

To address the above technical problem, the present disclosure provides a method of manufacturing a secondary battery, including: stacking a plurality of unit cells in a first direction to form a stack-type electrode assembly; coupling a multifunctional terminal block (MTB) to both ends of the stack-type electrode assembly extending in a second direction perpendicular to the first direction; attaching a laminate sheet to the MTB to enclose the stack-type electrode assembly; injecting an electrolyte into the stack-type electrode assembly enclosed by the laminate sheet; and sealing the laminate sheet to form a cell case, wherein the MTB includes: an MTB housing; a busbar provided within the MTB housing and electrically connected to the stack-type electrode assembly; and an electrode terminal part exposed to an outside of the MTB housing and electrically connected to the busbar.

In some embodiments, the stack-type electrode assembly may include: a first electrode stack including a plurality of unit cells stacked in the first direction sharing a first electrode lead; and a second electrode stack including a plurality of unit cells stacked in the first direction sharing a second electrode lead.

In some embodiments, the first electrode lead connected with the first electrode stack and the second electrode lead connected with the second electrode stack may be connected to a single busbar.

In some embodiments, the stack-type electrode assembly has three or more electrode stacks, and wherein a thickness in the first direction of the stack-type electrode assembly may be greater than a thickness in the first direction of the MTB housing.

In some embodiments, in the step of attaching a laminate sheet to the MTB, the laminate sheet may be a flat laminate sheet that has not undergone forming processing.

In some embodiments, the laminate sheet may include: a flexible metal layer; an inner resin layer on one side of the metal layer; and an outer resin layer on the other side of the metal layer.

In some embodiments, attaching the laminate sheet to the MTB may include fusing the inner resin layer of the laminate sheet to an outer side of the MTB housing.

In some embodiments, injecting the electrolyte may be performed after attaching the laminate sheet to the MTB.

In some embodiments, in the step of attaching the laminate sheet to the MTB, a pair of parallel edge parts of the laminate sheet may be fused to the sides of the MTB housing, and a pair of parallel end parts of the laminate sheet may include portions that are not fused to each other.

In some embodiments, in the step of injecting the electrolyte, the electrolyte may be injected through a portion in which the pair of parallel end parts of the laminate sheet is not fused to each other.

In some embodiments, sealing the laminate sheet may include fusing the inner resin layers of the pair of parallel end parts together.

In some embodiments, the MTB housing may include: an inner housing accommodating the busbar; and an outer housing accommodating the inner housing and defining an exterior of the MTB housing.

In some embodiments, the outer housing may include a metal material, and the electrode terminal part may be electrically isolated from the outer housing.

Another aspect of the present disclosure provides a secondary battery including: a stack-type electrode assembly comprising a plurality of unit cells stacked in a first direction and having electrode leads at both ends in a second direction perpendicular to the first direction; a multifunctional terminal block (MTB) provided at both ends of the stack-type electrode assembly; and a laminate sheet enclosing the sides of the stack-type electrode assembly, wherein a thickness in the first direction of the stack-type electrode assembly is greater than a thickness in the first direction of the MTB.

In some embodiments, the MTB may include: a busbar electrically connected to the stack-type electrode assembly; an inner housing accommodating the busbar; an outer housing accommodating the inner housing and defining an exterior of the MTB; and an electrode terminal part exposed to an outside of the outer housing and electrically connected to the busbar.

### [Advantageous Effects]

The manufacturing method of the present disclosure has the effect that high capacity secondary batteries can be manufactured without damage or defect of the pouch.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a flow diagram illustrating a secondary battery manufacturing according to one embodiment of the present disclosure.
FIGs. 2 through 9 are schematic diagrams illustrating a secondary battery manufacturing according to one embodiment of the present disclosure.
FIG. 10 is a side view illustrating a secondary battery according to one embodiment of the present disclosure.
FIG. 11 is an exploded perspective view of an MTB of a secondary battery according to one embodiment of the present disclosure.

### [Best Mode for Carrying out the Invention]

Hereinafter, preferred embodiments of the concept of the present disclosure will be described in detail with reference to the accompanying drawings. However, embodiments of the present disclosure may be modified in many other forms, and it should not be construed that the scope of the present disclosure is limited by the embodiments described below. It is preferred that the embodiments of the concept of the present disclosure be construed as being provided to more fully explain the inventive concept to one of ordinary skill in the art. Like designations generally refer to like elements. Furthermore, various elements and areas in the drawings are schematically depicted. Accordingly, the concept of the present disclosure is not limited by the relative sizes or spacing depicted in the accompanying drawings.

Terms such as "first," "second," and the like may be used to describe various components, but the components are not limited by such terms. These terms are used only for the purpose of distinguishing one component from another. For example, a first component may be named a second component, and vice versa, a second component may be named a first component, without departing from the scope of the concept of the present disclosure.

The terms used in this application is used to describe certain embodiments only and is not intended to limit the concept of the present disclosure. Singular expressions include the plural unless the context clearly indicates otherwise. In this application, expressions such as "includes" or "has" are intended to designate the presence of the features, counts, steps, operations, components, parts, or combinations thereof described, and are not to be understood as precluding the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the art to which the concept of the present disclosure belongs. It is further understood that such terms, as commonly used and as defined in dictionaries, are to be construed to have a meaning consistent with their meaning in the context of the art to which they relate, and are not to be construed in an unduly formal sense unless expressly defined herein.

When an embodiment can be instantiated differently, certain processes may be performed in a sequence other than that described. For example, two successively described processes may be performed substantially simultaneously, or in the opposite order from the order described.

In the accompanying drawings, variations in the depicted geometries may be expected, for example, due to manufacturing techniques and/or tolerances. Accordingly, embodiments of the present disclosure should not be construed as limited to the specific geometry of the areas shown herein, and should include, for example, variations in geometry resulting from manufacturing processes. All terms "and/or" used herein include each and every combination of one or more of the components mentioned. Further, as used herein, the term "substrate" may refer to the substrate itself, or to a laminated structure including the substrate and any predetermined layers or films formed on its surface. Further, as used herein, the term "surface of the substrate" may refer to the exposed surface of the substrate itself, or to the outer surface of a predetermined layer or film formed on the substrate.

### (First embodiment)

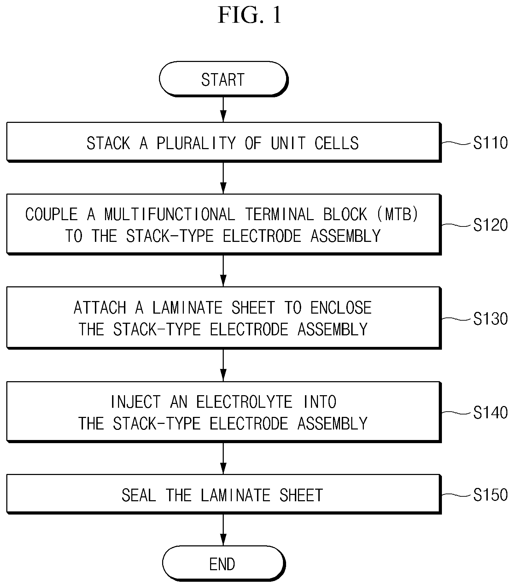

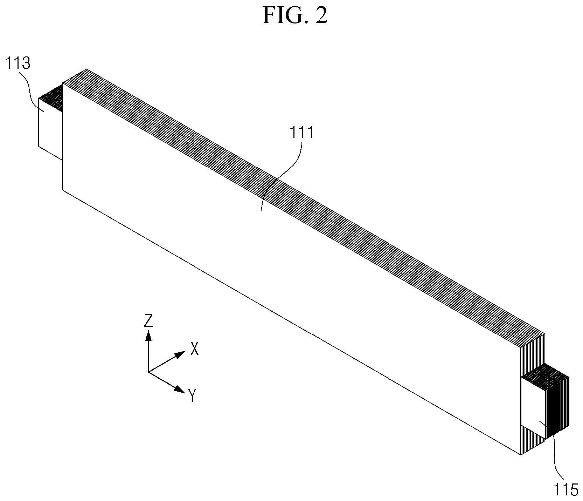

FIG. 1 is a flow diagram illustrating a secondary battery manufacturing method 100 according to one embodiment of the present disclosure. FIGS. 2 through 9 are schematic diagrams illustrating a secondary battery manufacturing method 100 according to one embodiment of the present disclosure.

In the following drawings, the secondary battery 100 is shown as defined in a vertical coordinate system defined by a first direction along the x-axis, a second direction along the y-axis, and a third direction along the z-axis, perpendicular to each other, but the first, second, and third directions need only be relatively perpendicular to each other and are not particularly limited.

Referring to FIGS. 1 and 2, a plurality of unit cells 111 may be stacked in a first direction (e.g., along an X-axis direction) to form a stack-type electrode assembly 110 (S110).

Each of the plurality of unit cells 111 may be an electrode material applied to a metal foil acting as a current collector.

Each of the unit cells 111 may have a thin plate-like body extending in a second direction (e.g., in the Y-axis direction). Each of the unit cells 111 may be a positive electrode unit cell or a negative electrode unit cell. In some embodiments, the plurality of unit cells 111 may be alternating stacks of one positive electrode unit cell and one negative electrode unit cell. The positive electrode unit cells and the negative electrode unit cells may be separated from each other by a separator.

In some other embodiments, the plurality of unit cells 111 may be a plurality of positive electrode unit cells and a plurality of negative electrode unit cells stacked alternately. The plurality of positive electrode unit cells and the plurality of negative electrode unit cells may be separated from each other by a separator.

The stack-type electrode assembly 110 may have electrode tabs 113 at both ends in the second direction (e.g., in the Y-axis direction). In some embodiments, the electrode tabs 113 may be extensions of metal foil portions of the unit cells 111. In some embodiments, the electrode tabs 113 may be electrically connected to the metal foil portion of the unit cells 111.

In some embodiments, the electrode tabs 113 located on the same side of the unit cells 111 may have the same polarity.

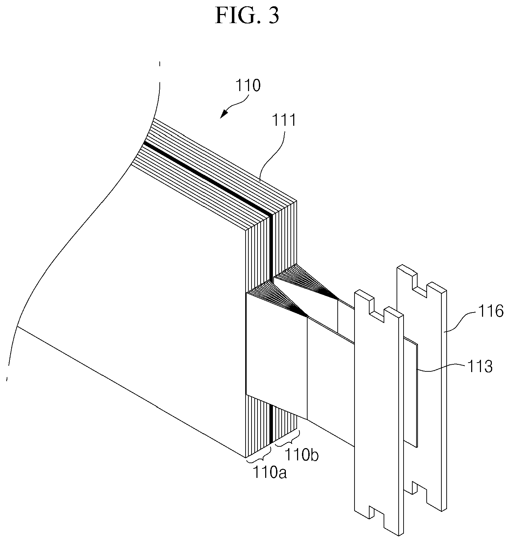

FIG. 3 is a schematic illustration of electrode leads 116 formed on electrode tabs 113 located on one side of the unit cells 111.

Referring to FIG. 3, a plurality of the electrode tabs 113 may be electrically connected to a single electrode lead 116. The electrode lead 116 may be electrically connected to the electrode tabs 113 of the plurality of unit cells 111. One electrode lead 116 may be connected to one or more electrode tabs 113. In some embodiments, two or more electrode tabs may be connected to one electrode lead 116.

In some embodiments, the plurality of electrode tabs 113 may first be coupled together, such as by welding, and then connected to the electrode leads 116. In other embodiments, the plurality of electrode tabs 113 may be connected to each other and electrically connected to the electrode leads 116 at the same time.

The stack-type electrode assembly 110 may include a first electrode stack 110a stacked in the first direction (e.g., in the X-axis direction) while sharing one electrode lead 116, and a second electrode stack 110b stacked in the first direction (e.g., in the X-axis direction) while sharing a different electrode lead 116.

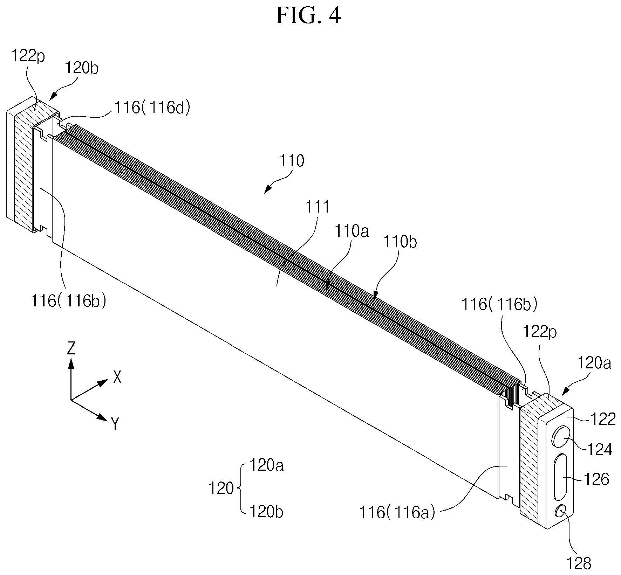

In some embodiments, the stack-type electrode assembly 110 may have two electrode leads 116 on one side and two electrode leads 116 on the other side. In this case, the first electrode stack 110a included in the stack-type electrode assembly 110 may have a first electrode lead 116a (see FIG. 4) on one side and a second electrode lead 116b (see FIG. 4) on the other side. Further, the second electrode stack 110b included in the stack-type electrode assembly 110 may have a third electrode lead 116c (see FIG. 4) on one side and a fourth electrode lead 116d (see FIG. 4) on the other side. However, the present disclosure is not limited to this.

In some embodiments, the stack-type electrode assembly 110 may have one or three or more electrode leads on one side. In some embodiments, the stack-type electrode assembly 110 may have one or three or more electrode leads on the other side.

Referring to FIGS. 1 and 4, a multifunctional terminal block (MTB) 120 can be coupled to both ends of the stack-type electrode assembly 110 extending in a second direction (e.g., in the Y-axis direction), (S120).

A first MTB 120a may be provided at one end of the stack-type electrode assembly 110 in the second direction (e.g., in the Y-axis direction) and a second MTB 120b may be provided at the other end. One among the first MTB 120a and the second MTB 120b may be electrically connected to a positive electrode side of the stack-type electrode assembly 110 and the other may be electrically connected to a negative electrode side of the stack-type electrode assembly 110.

Among the electrode leads 116 of the first electrode stack 110a, a first electrode lead 116a may be connected to the first MTB 120a and a second electrode lead 116b may be connected to the second MTB 120b. Among the electrode leads 116 of the second electrode stack 110b, a third electrode lead 116c may be connected to the first MTB 120a and a fourth electrode lead 116d may be connected to the second MTB 120b.

The second MTB 120b may have substantially the same configuration as the first MTB 120a, with only the polarity being different. The first MTB 120a will be described below, but one of ordinary skill in the art will be able to recognize the configuration of the second MTB 120b from this.

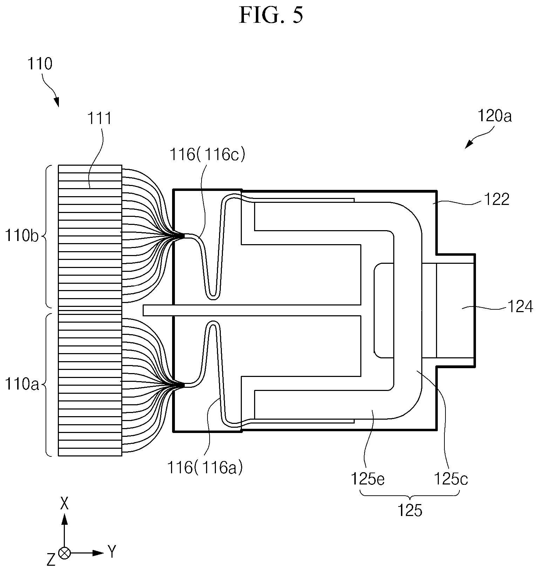

The first MTB 120a may include a MTB housing 122, an electrode terminal part 124 accommodated within the MTB housing 122, and a busbar 125 (see FIG. 5) electrically connecting the electrode terminal part 124 and the electrode leads 116.

The MTB housing 122 may be made of a relatively high stiffness material, such as metal, and defines the exterior of the first MTB 120a. In some embodiments, the MTB housing 122 may be made of aluminum (Al), nickel (Ni), iron (Fe), cobalt (Co), chromium (Cr), manganese (Mn), or an alloy containing one or more of the foregoing.

The MTB housing 122 may include a through-hole exposing the electrode terminal part 124 described hereinafter. The through-hole may be provided in the MTB housing 122 such that the electrode terminal part 124 is exposed facing in the second direction (e.g., in the Y-axis direction). Thus, the through-hole may be provided in a plane perpendicular to the second direction (e.g., in the Y-axis direction) of the MTB housing 122. Furthermore, the through-hole may have an opening part open in the longitudinal direction of the electrode assembly 110. The shape of the through-hole may be configured to conform to the outer peripheral shape of the portion of the electrode terminal part 124 exposed to the outside.

One of ordinary skill in the art will understand that the first MTB 120a may further include through-holes for a venting disk, through-holes for a check valve, and the like, as described hereinafter, as desired.

The electrode terminal part 124 is accommodated within the MTB housing 122 and may be exposed through the through-hole. The electrode terminal part 124 may be made of a metal or metal alloy with low electrical resistance, such as copper (Cu), aluminum (Al), nickel (Ni), iron (Fe), platinum (Pt), manganese (Mn), or an alloy containing one or more of the foregoing.

In some embodiments, the exposed surface on which the electrode terminal part 124 is exposed facing outward from the MTB housing 122 may be a plane. In some embodiments, the exposed surface may have a plane extending perpendicular to the second direction (e.g., in the Y-axis direction).

In some embodiments, an electrically insulating spacer may be provided between the electrode terminal part 124 and the MTB housing 122 such that the electrode terminal part 124 is electrically isolated from the MTB housing 122.

In some embodiments, the first MTB 120a may include a rupture disk 126 configured to rupture in the event of an excessive increase in internal pressure of the secondary battery 100, thereby discharging the gases responsible for the excessively elevated internal pressure. The rupture disk 126 may not be restored to its original state if it ruptures due to a thermal event occurring within the interior of the secondary battery 100. The rupture disk 126 may be any rupture disk known in the art and is not particularly limited thereto.

In some embodiments, the first MTB 120a may further include a check valve 128. The check valve 128 may be configured to open to discharge gases within the secondary battery 100 when the internal pressure of the secondary battery 100 becomes higher than a predetermined pressure, and to close again when the internal pressure is relieved by the discharge of the gases. The check valve 128 may be restored to its original state after discharging the internal gas, as there is no part of the check valve 128 that is ruptured by the discharge of the gas.

Further busbars may be provided within the first MTB 120a. FIG. 5 is a schematic diagram illustrating a cross-section of the first MTB 120a cut through the electrode terminal part 124 and in a plane perpendicular to a third direction (e.g., the Z-axis direction).

Referring to FIG. 5, the busbar 125 may be provided to be in surface contact with the electrode terminal part 124. The busbar 125 may be made of a metallic material having a low electrical resistance. In some embodiments, the busbar 125 may be made of copper (Cu), nickel (Ni), aluminum (Al), iron (Fe), cobalt (Co), platinum (Pt), molybdenum (Mo), tin (Sn), palladium (Pd), or an alloy including one or more of the foregoing.

The busbar 125 may be configured to be in surface contact with the electrode leads 116 of the stack-type electrode assembly 110. In some embodiments, the busbar 125 may be coupled to the electrode leads 116 by welding. In some embodiments, the busbar 125 may be coupled to the electrode leads 116 by fasteners, such as rivets.

Referring to FIGS. 4 and 5, the first electrode lead 116a of the first electrode stack 110a and the third electrode lead 116c of the second electrode stack 110b may be connected to a single busbar 125. In the same manner, the second electrode lead 116b of the first electrode stack 110a and the fourth electrode lead 116d of the second electrode stack 110b may be connected to one busbar 125 provided within the second MTB 120b.

In some embodiments, the busbar 125 may include a plane-shaped center part 125c extending horizontally in the first direction (e.g., in the X-axis direction) and an edge part 125e bent and extending from the center part 125c. In some embodiments, the center part 125c may be configured to form a substantially U-shaped cross-sectional shape together with the edge part 125e and may extend in the third direction (e.g., in a Z-axis direction). In some embodiments, the edge part 125e may have a plane extending perpendicular to the first direction (e.g., in the X-axis direction).

The busbar 125 may be in surface contact with the electrode terminal part 124 at the center part 125c. The busbar 125 may be in surface contact with the electrode leads 116 at the edge part 125e.

In some embodiments, the electrode leads 116 may include a pre-bended portion that is bent at a portion that is not in contact with the busbar 125. The pre-bended portion may prevent stresses from being concentrated in certain areas of the electrode leads 116 by external forces applied to the stack-type electrode assembly 110, which may result in increased safety.

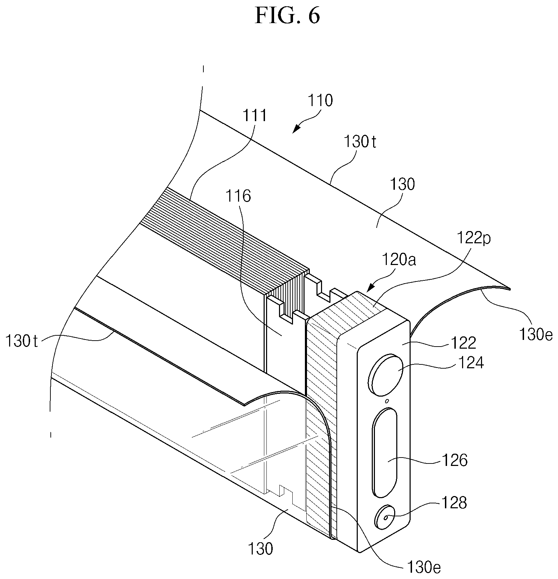

Referring to FIGS. 1 and 6, a laminate sheet 130 may be attached to the MTB 120 to enclose the stack-type electrode assembly 110.

The laminate sheet 130 may be a flat laminate sheet that has not been forming processed. As used herein, referring to the laminate sheet 130 as being flat only means that it is not pre-formed to be shaped to at least partially accommodate the stack-type electrode assembly 110, and does not mean that the laminate sheet 130 is free of curvature.

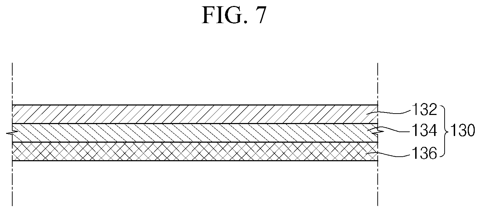

FIG. 7 is a partial cross-sectional view of the laminate sheet 130, according to one embodiment of the present disclosure.

Referring to FIGS. 1, 6, and 7, the laminate sheet 130 may be configured to wrap around the sides of the stack-type electrode assembly 110. In some embodiments, the laminate sheet 130 may be attached to a side of the MTB 120 such that it at least partially covers the side of the MTB 120. In some embodiments, the laminate sheet 130 may cover the entirety of the sides parallel to the second direction (e.g., Y-axis direction) of the MTB 120. In some other embodiments, the laminate sheet 130 may cover only a portion of the sides parallel to the second direction (e.g., Y-axis direction) of the MTB 120.

The laminate sheet 130 may include a flexible metal layer 134, an inner resin layer 132 provided on one side of the metal layer 134, and an outer resin layer 136 provided on the other side of the metal layer 134.

The metal layer 134 may maintain a suitable thickness, prevent water vapor, oxygen, and other gases from infiltrating from the outside to the inside, and prevent electrolyte leakage. In some embodiments, the metal layer 134 may include one or more among, but not limited to, iron (Fe), carbon (C), chromium (Cr), manganese (Mn), nickel (Ni), aluminum (Al), and alloys thereof. The metal layer 134 may be made of an iron-containing material to provide greater mechanical strength, or an aluminum material to provide greater flexibility, and aluminum metal foil is typically used.

The metal layer 134 may be configured to have a suitable thickness and mechanical strength such that it is relatively easily deformed by externally applied forces, and does not develop cracks or holes upon repeated deformation.

In some embodiments, the metal layer 134 can have a thickness of from about 20 micrometers (µm) to about 100 µm. In some embodiments, the metal layer 134 may have a thickness of about 20 micrometers (µm) to about 100 µm, about 25 µm to about 95 µm, about 30 µm to about 90 µm, about 35 µm to about 85 µm, about 40 µm to about 80 µm, about 45 µm to about 75 µm, about 50 µm to about 70 µm, about 55 µm to about 60 µm, or a range between any two of these figures.

An inner resin layer 132 provided on one side of the metal layer 134 may include a thermal bonding layer. In some embodiments, the inner resin layer 132 may include a polyolefin-based material capable of performing a sealing action through fusion. In some embodiments, the inner resin layer 132 may include a modified propylene, such as unstretched cast polypropylene (CPP), or a polypropylene-butylene-ethylene terpolymer.

The inner resin layer 132 may be formed by coating or laminating on one side of the metal layer 134.

An outer resin layer 136 provided on the other side of the metal layer 134 may serve as a base substrate and a protective layer for forming the laminate sheet 130. The outer resin layer 136 may include an insulating material such as polyethylene terephthalate (PET) or nylon.

In some embodiments, the inner resin layer 132 and the outer resin layer 136 may each have a thickness of from about 10 micrometers (µm) to about 50 µm. In some embodiments, the respective thicknesses of the inner resin layer 132 and the outer resin layer 136 may range from about 10 micrometers (µm) to about 50 µm, about 12 µm to about 48 µm, about 15 µm to about 45 µm, about 17 µm to about 43 µm, about 20 µm to about 40 µm, about 22 µm to about 38 µm, about 25 µm to about 35 µm, about 27 µm to about 33 µm, or a range between any two of these figures.

In some embodiments, an adhesive resin layer may be further provided between the inner resin layer 132 and the metal layer 134 and/or between the outer resin layer 136 and the metal layer 134. The adhesive resin layer may be provided for a smooth attachment between dissimilar materials. The adhesive resin layer may be formed as a single layer or as a multilayer. In some embodiments, the adhesive resin layer may include a polyolefin-based resin, a polyurethane-based resin, an epoxy-based resin, or a mixture thereof.

In some embodiments, the inner resin layer 132 may be fused to a fusion resin layer 122p provided on the sides of the MTBs 120 at both ends in the second direction (e.g., Y-axis direction). When the laminate sheet 130 encloses the sides of the MTBs 120, the inner resin layer 132 may be fused to the fusion resin layer 122p such that the stack-type electrode assembly 110 may be enclosed within the secondary battery. The inner resin layer 132 may be fused on the sides by being melted and then cooled by heating while in contact with the fusion resin layer 122p at the sides of the MTBs 120.

The fusion resin layer 122p is a layer of thermoplastic resin and may include at least one among, for example, polyolefin-based resin, polyester-based resin, polyamide-based resin, polyvinyl chloride, polyvinylidene chloride, polystyrene, polyacrylonitrile, polyurethane, polycarbonate, polyacetal, polyacrylate, and modified polyvinyl alcohol resin.

The polyolefin-based resins include, for example, polyethylene, polypropylene, poly(1-butene), poly(4-methyl-1-pentene), ethylene-propylene copolymers, copolymers of ethylene with α-olefins having a carbon number of 4 or more, copolymers of polyolefins with maleic anhydride, ethylene-vinyl ester copolymers, ethylene-acrylic acid ester copolymers, or modified polyolefins graft-modified with unsaturated carboxylic acids or derivatives thereof, but the disclosure is not limited thereto.

The polyester-based resin includes polyethylene terephthalate, polybutylene terephthalate, or polyethylene naphthalate, but the disclosure is not limited thereto.

The polyamide-based resins include nylon 6, nylon 6·6, nylon 6/66 copolymers, nylon 11, nylon 12, or poly (m-xylene adipamide), but the disclosure is not limited thereto.

The fusion resin layer 122p may be casted, or it may be uniaxially or biaxially stretched or rolled.

In some embodiments, the fusion resin layer 122p may at least partially cover a side of the MTB housing 122. In some embodiments, the fusion resin layer 122p may extend from an inner end of the side of the MTB housing 122 toward an outer end of the side of the MTB housing 122. In some embodiments, the fusion resin layer 122p may enclose the side of the MTB housing 122 having a predetermined width between the inner end and the outer end.

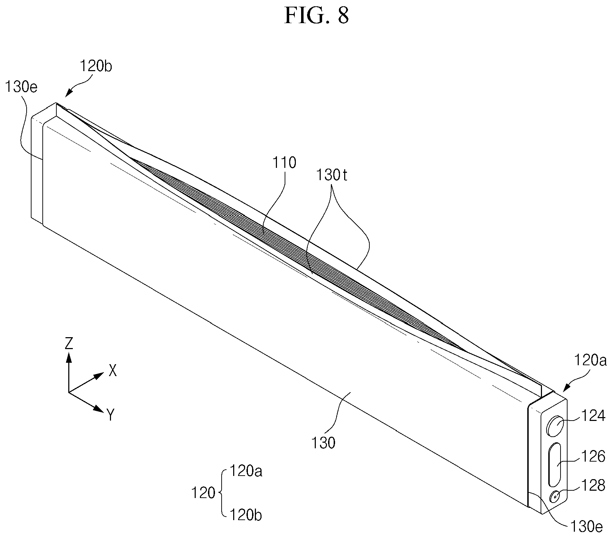

FIG. 8 is a perspective view showing the laminate sheet 130 fused to the sides of the MTBs 120.

Referring to FIGS. 7 and 8, the laminate sheet 130 may have a pair of substantially parallel edge parts 130e fused to the outer sides of the MTBs 120. Meanwhile, a pair of substantially parallel end parts 130t connecting the pair of edge parts 130e of the laminate sheet 130 may not be fused to each other, and a portion of the stack-type electrode assembly 110 may be exposed between the pair of end parts 130t.

While the pair of end parts 130t are shown in FIG. 8 as not being entirely fused together along the longitudinal direction, the pair of end parts 130t may be substantially fused along the longitudinal direction and not fused for only a portion of their length.

Referring to FIGS. 1 and 8, electrolyte can be supplied to the stack-type electrode assembly 110 through the non-fused portions of the pair of end parts 130t (S140).

In some embodiments, the step of supplying the electrolyte may be performed after attaching the laminate sheet 130 to the MTBs 120. In some embodiments, the step of supplying the electrolyte may be performed after sealing the laminate sheet. In this case, at least one of the MTBs 120 may include an electrolyte inlet.

The electrolyte may be any conventional electrolyte used for lithium secondary batteries, and is not particularly limited thereto.

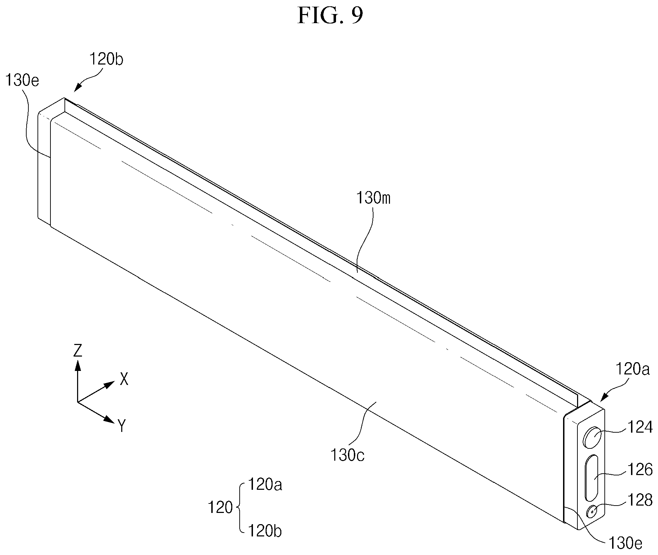

Referring to FIGS. 1 and 9, the laminate sheet 130 may be sealed to form a cell case 130c (S150). The cell case 130c may define the interior space of the secondary battery 100 with the MTBs 120.

In order to seal the laminate sheet 130, the end parts 130t of the laminate sheet 130 may be fused together to form a joint part 130m. The joint part 130m may be formed by fusing between the inner resin layers 132 of the laminate sheet 130. Specifically, the inner resin layer 132 of the end part 130t of one side and the inner resin layer 132 of the end part 130t of the other side may be fused together to form the joint part 130m. In some embodiments, the fusion may be thermal fusion, but the present disclosure is not limited thereto.

According to the secondary battery manufacturing method 100 described with reference to FIGS. 1 to 9, it is possible to manufacture the secondary battery 100 that accommodates a plurality of electrode stacks because the laminate sheet 130 is not subjected to a forming process. If a foaming process is performed on the laminate sheet to manufacture a secondary battery accommodating a plurality of electrode stacks, there is a possibility of damage to the laminate sheet at the step part and an increase in defects due to the excessive step required. On the other hand, the secondary battery manufacturing method 100 described with reference to FIGS. 1 to 9 does not require a foaming process of the laminate sheet 130, so that a large capacity cell can be instantiated even when accommodating a plurality of electrode stacks without fear of damage to the laminate sheet and consequent defects.

### (Second embodiment)

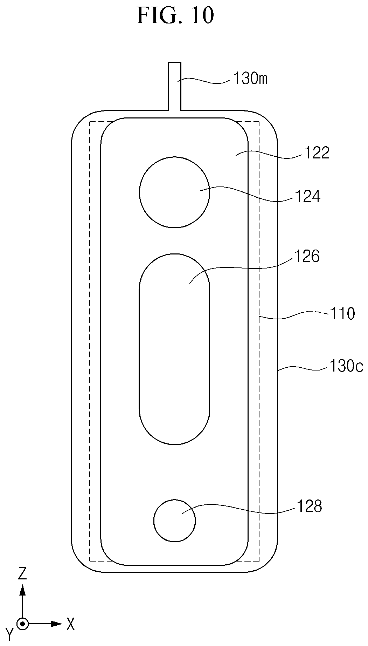

FIG. 10 is a side view illustrating a secondary battery 100 according to one embodiment of the present disclosure.

Referring to FIG. 10, the thickness in a first direction (e.g., in the X-axis direction) of the stack-type electrode assembly 110 may be greater than the thickness in a first direction (e.g., in the X-axis direction) of the MTB housing 122. The stack-type electrode assembly 110 may include two, three, four, or a greater number of electrode stacks, thereby proportionally increasing the thickness in the first direction (e.g., in the X-axis direction). The large thickness of the stack-type electrode assembly 110 may allow it to be surrounded by the laminate sheet 130 without the need for a forming process, thereby eliminating concerns of damage to the laminate sheet 130 and resulting in defects.

### (Third embodiment)

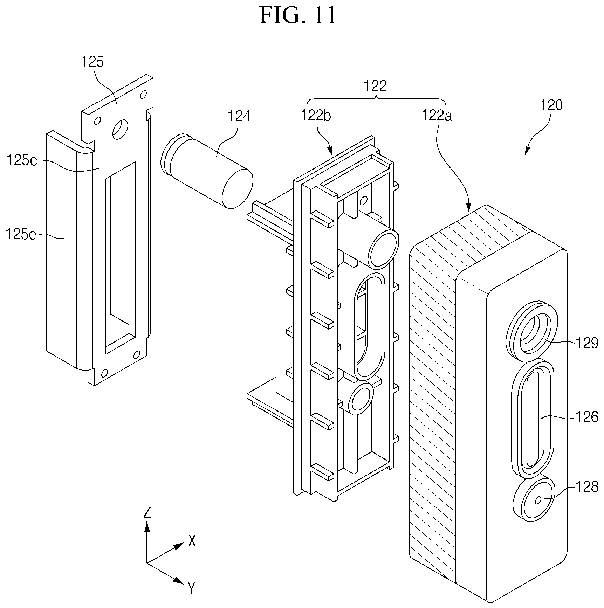

FIG. 11 is an exploded perspective view illustrating the MTB 120 of the secondary battery 100 according to one embodiment of the present disclosure.

Referring to FIG. 11, the MTB 120 may include an inner housing 122b that accommodates the busbar 125 and an outer housing 122a that accommodates the inner housing 122b and defines the exterior of the MTB housing 122.

In some embodiments, the inner housing 122b may be made of an insulator. In some embodiments, the inner housing 122b may be made of a polymeric resin. In some embodiments, the inner housing 122b may be formed by injection molding. The inner housing 122b may include a through-hole through which the electrode terminal part 124 may penetrate.

In some embodiments, the outer housing 122a may include a metallic material. In some embodiments, the outer housing 122a may include a metal, such as aluminum, and may be made of aluminum or an aluminum alloy, for example.

As described with reference to FIGS. 4 and 5, the outer housing 122a may have through-holes through which the electrode terminal part 124 may penetrate. In some embodiments, the outer housing 122a may have through-holes through which rupture disks 126, check valves 128, and the like may be provided, and within which rupture disks 126, check valves 128, and the like may be provided.

The outer housing 122a may be made of electrical conductors, in which case an insulating gasket 129 may be provided for electrical insulation from the electrode terminal part 124. The insulating gasket 129 may be provided along the inner circumferential surface of the through-hole through which the electrode terminal part 124 penetrates.

The electrode terminal part 124 may be configured to be in surface contact with a center part 125c of the busbar 125. The electrode terminal part 124 may be exposed to the outside of the MTB 120 by penetrating the inner housing 122b and the outer housing 122a while in surface contact with the busbar 125.

Although embodiments of the disclosure have been described in detail above, one of ordinary skill in the art to which the disclosure belongs will be able to make many modifications to the disclosure without departing from the spirit and scope of the disclosure as defined in the appended claims. Accordingly, future modifications of the embodiments of the disclosure will not depart from the art of the disclosure.

### [Description of Reference Numerals]

100: SECONDARY BATTERY
110: STACK-TYPE ELECTRODE ASSEMBLY
110a: FIRST ELECTRODE STACK
110b: SECOND ELECTRODE STACK
111: UNIT CELL
113: ELECTRODE TAB
116: ELECTRODE LEAD
120: MTB
122: MTB HOUSING
122a: OUTER HOUSING
122b: INNER HOUSING
122p: FUSION RESIN LAYER
124: ELECTRODE TERMINAL PART
125: BUSBAR
126: RUPTURE DISK
128: CHECK VALVE
129: INSULATING GASKET
130: LAMINATE SHEET

## Claims

1. A method of manufacturing a secondary battery, comprising:
stacking a plurality of unit cells in a first direction to form a stack-type electrode assembly;
coupling a multifunctional terminal block (MTB) to both ends of the stack-type electrode assembly extending in a second direction perpendicular to the first direction;
attaching a laminate sheet to the MTB to enclose the stack-type electrode assembly;
injecting an electrolyte into the stack-type electrode assembly enclosed by the laminate sheet; and
sealing the laminate sheet to form a cell case,
wherein the MTB comprises:
an MTB housing;
a busbar provided within the MTB housing and electrically connected to the stack-type electrode assembly; and
an electrode terminal part exposed to an outside of the MTB housing and electrically connected to the busbar.

2. The method of claim 1, wherein the stack-type electrode assembly comprises:
a first electrode stack including a plurality of unit cells stacked in the first direction sharing a first electrode lead; and
a second electrode stack including a plurality of unit cells stacked in the first direction sharing a second electrode lead.

3. The method of claim 2, wherein the first electrode lead connected with the first electrode stack and the second electrode lead connected with the second electrode stack are connected to a single busbar.

4. The method of claim 2, wherein the stack-type electrode assembly has three or more electrode stacks, and
wherein a thickness in the first direction of the stack-type electrode assembly is greater than a thickness in the first direction of the MTB housing.

5. The method of claim 1, wherein, in the step of attaching a laminate sheet to the MTB, the laminate sheet is a flat laminate sheet that has not undergone forming processing.

6. The method of claim 1, wherein the laminate sheet comprises:
a flexible metal layer;
an inner resin layer on one side of the metal layer; and
an outer resin layer on the other side of the metal layer.

7. The method of claim 6, wherein attaching the laminate sheet to the MTB includes fusing the inner resin layer of the laminate sheet to an outer side of the MTB housing.

8. The method of claim 6, wherein injecting the electrolyte is performed after attaching the laminate sheet to the MTB.

9. The method of claim 8, wherein, in the step of attaching the laminate sheet to the MTB, a pair of parallel edge parts of the laminate sheet is fused to the sides of the MTB housing, and a pair of parallel end parts of the laminate sheet includes portions that are not fused to each other.

10. The method of claim 9, wherein, in the step of injecting the electrolyte, the electrolyte is injected through a portion in which the pair of parallel end parts of the laminate sheet is not fused to each other.

11. The method of claim 9, wherein sealing the laminate sheet includes fusing the inner resin layers of the pair of parallel end parts together.

12. The method of claim 1, wherein the MTB housing comprises:
an inner housing accommodating the busbar; and
an outer housing accommodating the inner housing and defining an exterior of the MTB housing.

13. The method of claim 12, wherein:
the outer housing includes a metal material, and
the electrode terminal part is electrically isolated from the outer housing.

14. A secondary battery comprising:
a stack-type electrode assembly comprising a plurality of unit cells stacked in a first direction and having electrode leads at both ends in a second direction perpendicular to the first direction;
a multifunctional terminal block (MTB) provided at both ends of the stack-type electrode assembly; and
a laminate sheet enclosing the sides of the stack-type electrode assembly,
wherein a thickness in the first direction of the stack-type electrode assembly is greater than a thickness in the first direction of the MTB.

15. The secondary battery of claim 14, wherein the MTB comprises:
a busbar electrically connected to the stack-type electrode assembly;
an inner housing accommodating the busbar;
an outer housing accommodating the inner housing and defining an exterior of the MTB; and
an electrode terminal part exposed to an outside of the outer housing and electrically connected to the busbar.
